# EUROPÄISCHE PATENTSCHRIFT

(11) **EP 4 046 232 B1**
(45) Veröffentlichungstag und Bekanntmachung des Hinweises auf die Patenterteilung: **27.12.2023**
(21) Anmeldenummer: 20767772.5
(22) Anmeldetag: 03.09.2020
(51) Int. Cl.: H01M 50/572, H01M 10/42, H01M 10/48, H01M 50/30, H01M 50/325

(54) **ANORDNUNG ZUR DRUCKÜBERWACHUNG INNERHALB EINES BATTERIEGEHÄUSES, BATTERIEMANAGEMENTVORRICHTUNG UND BATTERIESYSTEM MIT EINER ANORDNUNG**
ARRANGEMENT FOR MONITORING A PRESSURE INSIDE A BATTERY HOUSING, BATTERY MANAGEMENT SYSTEM AND BATTERY SYSTEM WITH SUCH AN ARRANGEMENT
ARRANGEMENT POUR SURVEILLER UNE PRESSION À L'INTÉRIEUR D'UN BOÎTIER DE BATTERIE, SYSTÈME DE GESTION DE BATTERIE ET SYSTÈME DE BATTERIE AYANT UN TEL ARRANGEMENT

(30) Priorität: 15.10.2019 DE 102019215849
(43) Veröffentlichungstag der Anmeldung: 24.08.2022
(73) Patentinhaber: Vitesco Technologies GmbH, 93055 Regensburg (DE)
(72) Erfinder: DIETRICH, Markus, 81737 München (DE); ESER, Gerhard, 81737 München (DE); WEBER, Christian, 81737 München (DE)
(74) Vertreter: Vitesco Technologies
(86) Internationale Anmeldenummer: PCT/EP2020/074601
(87) Internationale Veröffentlichungsnummer: WO 2021/073802

(56) Entgegenhaltungen:
- DE-A1-102012 223 480
- DE-A1-102012 223 708
- DE-A1-102014 116 451
- US-A1- 2018 040 926

## Beschreibung

### Technisches Gebiet:

Die vorliegende Erfindung betrifft eine Anordnung zur Drucküberwachung innerhalb eines Batteriegehäuses eines Batteriesystems, insb. eines Traktionsbatteriesystems eines elektrisch angetriebenen Fahrzeugs, sowie eine Batteriemanagementvorrichtung zum Betreiben eines Batteriesystems, insb. eines Traktionsbatteriesystems eines elektrisch angetriebenen Fahrzeugs, mit einer genannten Anordnung. Ferner betrifft die Erfindung ein Batteriesystem, insb. ein Traktionsbatteriesystem eines elektrisch angetriebenen Fahrzeugs, mit einer Batteriemanagementvorrichtung bzw. einer genannten Anordnung.

### Stand der Technik und Aufgabe der Erfindung:

Lithium-Ionen-Batteriezellen oder sonstige Batteriezellen mit vergleichbaren Eigenschaften werden unter anderem in Traktionsbatteriesystemen von elektrisch angetriebenen Fahrzeugen zu deren Antrieb verwendet. Dabei sind derartige Batteriezellen aufgrund ihrer Beschaffenheit, insb. Zellechemie, anfällig für äußere Einflüsse, wie z. B. eine starke Hitzeentwicklung. In kritischen Situationen, wie z. B. bei einer Überhitzung, kann es bei den Batteriezellen zu einem so genannten thermischen Durchgehen (auf Englisch "thermal runaway") kommen. Bei einem thermischen Durchgehen reagieren einzelne Komponenten der Batteriezelle unkontrolliert miteinander unter einer starken Hitzeentwicklung und Gasbildung, was zu Brand oder Explosion der Batteriesysteme führt. Um dies zu vermeiden, muss ein thermisches Durchgehen bei den Batteriezellen frühzeitig erkannt werden. Anordnungen zur Drucküberwachung innerhalb eines Batteriesystems wurden z.B. in DE 10 2012 223480 A1, US 2018/040926 A1, DE 10 2012 223708 A1 und DE 10 2014 116451 beschrieben.

Damit besteht die Aufgabe der vorliegenden Anmeldung darin, eine Möglichkeit zur Zustandsbestimmung bei einem Batteriesystem bereitzustellen, mit der ein kritischer Zustand, insb. ein thermisches Durchgehen, bei dem Batteriesystem bzw. bei den Batteriezellen des Batteriesystems zuverlässig erkannt werden kann.

### Beschreibung der Erfindung:

Diese Aufgabe wird durch Gegenstände der unabhängigen Ansprüche gelöst. Vorteilhafte Ausgestaltungen sind Gegenstand der Unteransprüche.

Gemäß einem ersten Aspekt der Erfindung wird eine (elektrische bzw. elektromechanische) Anordnung zur Drucküberwachung innerhalb eines Batteriegehäuses eines Batteriesystems, insb. eines Traktionsbatteriesystems eines elektrisch angetriebenen Fahrzeugs, bereitgestellt, wobei das Batteriesystem neben dem Batteriegehäuse noch eine Anzahl von innerhalb des Batteriegehäuses angeordneten Batteriezellen aufweist.

Die Anordnung weist einen ersten Stromversorgungspfad und eine Druckmesseinheit zum Messen eines Drucks innerhalb des Batteriegehäuses auf, wobei die Druckmesseinheit zur Stromversorgung (durch das Batteriesystem bzw. dessen Batteriezellen) an dem ersten Stromversorgungspfad elektrisch angeschlossen ist.

Die Anordnung weist ferner eine druckempfindliche mechanische, insb. elektromechanische, Schalteinheit auf, die innerhalb des Batteriegehäuses angeordnet ist und über zwei elektrische Anschlüsse an dem ersten Stromversorgungspfad seriell zu der Druckmesseinheit elektrisch angeschlossen ist.

Die Schalteinheit ist eingerichtet, bei Überschreitung einer vorgegebenen Druckschwelle durch den Druck innerhalb des Batteriegehäuses in einen elektrisch leitenden Schaltzustand zu schalten und somit eine Stromversorgung der Druckmesseinheit über den ersten Stromversorgungspfad (durch das Batteriesystem bzw. dessen Batteriezellen) herzustellen, und bei Unterschreitung der Druckschwelle durch den Druck innerhalb des Batteriegehäuses in einen elektrisch sperrenden Schaltzustand zu schalten und somit die Stromversorgung der Druckmesseinheit über den ersten Stromversorgungspfad zu unterbrechen.

Die Erfindung macht die Gasbildung im Inneren des Batteriegehäuses des Batteriesystems zunutze, die in der Regel als Folge eines kritischen Zustandes, insb. eines thermischen Durchgehens, bei den Batteriezellen entsteht, um den kritischen Zustand bzw. das thermische Durchgehen bei den Batteriezellen bzw. dem Batteriesystem frühzeitig zu erkennen. Dabei wird der (Luft- bzw. Gas-)Druck im Inneren des Batteriegehäuses bzw. dessen Veränderung, der/die in einem direkten Zusammenhang mit der Gasbildung steht, zur Überwachung des kritischen Zustandes herangezogen. Zur Überwachung des kritischen Zustandes wird daher der (Luft- bzw. Gas-)Druck im Inneren des Batteriegehäuses kontinuierlich erfasst und bei einer Abweichung des erfassten Drucks von einem vorgegebenen Drucksollwertbereich bzw. bei einer Überschreitung einer vorgegebenen Druckschwelle durch den erfassten Druck wird ein kritischer Zustand bei den Batteriezellen bzw. dem Batteriesystem diagnostiziert. Dabei erfolgt die Drucküberwachung mittels der Druckmesseinheit, der über den ersten Stromversorgungspfad mit Strom von dem Batteriesystem versorgt wird.

Die druckempfindliche mechanische Schalteinheit ist in der Lage, unabhängig von der Druckmesseinheit autark und insb. ausschließlich von dem im Inneren des Batteriegehäuses herrschenden Druck beeinflusst ihren Schaltzustand zu ändern. Dabei kann die Schalteinheit bspw. als ein druckempfindlicher mechanischer Schalter, wie z. B. mit einem Dehnungsmessstreifen, ausgebildet sein, der bei einer Veränderung eines auf ihn wirkenden (Luft- bzw. Gas-)Drucks dessen Größe, Form oder sonstige vergleichbare physikalische (mechanische) Eigenhaft zu ändern und somit unabhängig von der Druckmesseinheit autark zwischen einem elektrisch leitenden Schaltzustand und einem elektrisch sperrenden Schaltzustand umzuschalten. Dabei ist die Schalteinheit derart ausgeführt, dass diese bei einem Druck ab der vorgegebenen Druckschwelle in den elektrisch leitenden Schaltzustand schaltet und bei einem Druck unter der Druckschwelle in den elektrisch sperrenden Schaltzustand schaltet.

Dabei ist die Druckschwelle ein vorab bestimmbarer Druckwert, bei dessen Überschreibung durch einen Druck im Inneren des Batteriegehäuses ein kritischer Zustand bzw. ein bevorstehender kritischer Zustand, insb. ein thermisches Durchgehen bzw. ein bevorstehendes thermisches Durchgehen, bei den Batteriezellen bzw. dem Batteriesystem vermutet wird. Die Druckschwelle wird so gewählt, dass ein (möglicher bevorstehender) kritischer Zustand, insb. ein (mögliches bevorstehendes) thermisches Durchgehen, und ein damit einhergehender Druckanstieg im Inneren des Batteriegehäuses frühzeitig/rechtzeitig erkannt werden können.

In dem elektrisch leitenden Schaltzustand stellt die Schalteinheit, die seriell zu der Druckmesseinheit in dem Stromversorgungspfad elektrisch angeschlossen ist, eine Stromversorgung für die Druckmesseinheit her. Mit dem Strom versorgt kann die Druckmesseinheit den Druck im Inneren des Batteriegehäuses mit einer erforderlichen hohen Genauigkeit messen und die Druckmesswerte zu einer genaueren Analyse an eine nachgeschaltete Batteriemanagementanordnung weiterleiten, welche die Druckmesswerte bspw. mit einem kritischen Druckschwellwert vergleicht und basierend auf dem Vergleichsergebnis eine genauere Aussage über einen kritischen Zustand trifft und bei Bedarf weitere erforderliche Schritte, wie z. B. Abgabe eines Warnsignals etc., einleitet.

Dabei erfolgt die Stromversorgung in der Regel durch die Batteriezellen des Batteriesystems, an dem die Anordnung auch (direkt oder indirekt) elektrisch angeschlossen ist.

Als eine druckempfindliche mechanische Schalteinheit verbraucht die Schalteinheit selbst keinen Strom und belastet das Batteriesystem, insb. während dessen inaktiven Phasen (Ruhemodus), nicht und schont somit das Batteriesystem und schützt folglich auch das Batteriesystem vor einer Tiefentladung.

Dadurch, dass die Schalteinheit in der Zeitphase, in der der Druck im Inneren des Batteriegehäuses die vorgegebene Druckschwelle unterschreitet und somit es keine Gefahr eines kritischen Zustands bei dem Batteriesystem vorliegt, die Stromversorgung der Druckmesseinheit (durch das Batteriesystem) unterbricht, vermeidet die Schalteinheit einen (unnötigen) Stromverbrauch durch die Druckmesseinheit und schont das Batteriesystem zusätzlich.

Sobald der Druck im Inneren des Batteriegehäuses die vorgegebene Druckschwelle überschreitet, stellt die Schalteinheit durch Ändern ihrer Größe, Form oder sonstigen vergleichbaren physikalischen (mechanischen) Eigenhaft die Stromversorgung für die Druckmesseinheit über den ersten Stromversorgungspfad her, sodass die Druckmesseinheit von nun an eine genauere Messung des Drucks Inneren des Batteriegehäuses durchführen kann und die zuvor erwähnte Batteriemanagementanordnung mit diesen genaueren Messwerten eine genaue zuverlässige Aussage über einen kritischen Zustand treffen und weitere erforderliche Schritte, wie z. B. Abgabe eines Warnsignals etc., einleiten kann.

Zusammengefasst wird die Druckmesseinheit, insb. während der inaktiven Phasen des Batteriesystems, nur ereignisgesteuert aktiviert, wobei diese Aktivierung durch die druckempfindliche mechanische Schalteinheit gesteuert wird, die der Druckmesseinheit vorgeschaltet ist und zudem unabhängig von der Druckmesseinheit oder einer sonstigen Steuereinheit autark agiert und ohne Stromeigenverbrauch ausschließlich auf eine Druckveränderung, insb. einen Druckanstieg, im Inneren des Batteriegehäuses reagiert.

Damit ist eine Möglichkeit zur Zustandsbestimmung bei einem Batteriesystem bereitgestellt, mit der ein kritischer Zustand, insb. ein thermisches Durchgehen, bei dem Batteriesystem bzw. bei den Batteriezellen des Batteriesystems zuverlässig erkannt werden kann.

Bspw. ist die Anordnung ferner in einem Ruhemodus betreibbar ausgeführt, in dem die Anordnung die Stromversorgung für die Druckmesseinheit unterbricht, sodass die Druckmesseinheit keine Energie zum Durchführen deren Funktionen einschließlich zum Messen des Drucks innerhalb des Batteriegehäuses erhält. In diesem Ruhemodus misst die Druckmesseinheit den Druck nicht. Dabei ist die Schalteinheit ferner eingerichtet, in dem Ruhemodus der Anordnung und bei Überschreitung der vorgegebenen Druckschwelle durch den Druck innerhalb des Batteriegehäuses in den elektrisch leitenden Schaltzustand zu schalten und somit eine Stromversorgung der Druckmesseinheit über den ersten Stromversorgungspfad (durch das Batteriesystem bzw. dessen Batteriezellen) herzustellen, und in dem Ruhemodus der Anordnung und bei Unterschreitung der Druckschwelle durch den Druck innerhalb des Batteriegehäuses in den elektrisch sperrenden Schaltzustand zu schalten und somit die Stromversorgung der Druckmesseinheit über den ersten Stromversorgungspfad zu unterbrechen.

Bspw. liegt die zuvor genannte Druckschwelle unter einem kritischen Druckschwellwert. Dabei ist der kritischer Druckschwellwert ein Druckwert, bei dessen Überschreitung (durch den (Luft- bzw. Gas-)Druck innerhalb des Batteriegehäuses) ein kritischer bzw. fehlerhafter Zustand, wie z. B. ein thermisches Durchgehen, bei dem Batteriesystems bzw. bei den Batteriezellen vorliegt, bzw. zumindest nahelegt wird, dass ein kritischer bzw. fehlerhafter Zustand bei dem Batteriesystems bzw. bei den Batteriezellen vorliegt.

Bspw. weist die Druckmesseinheit einen Drucksensor mit einem druckempfindlichen mikroelektromechanischen Element (auf Englisch "Microelectromechanical systems (MEMS)") auf, wobei das mikroelektromechanische Element als Teil der Schalteinheit ausgebildet ist. Dabei ist das mikroelektromechanische Element eingerichtet, bei Überschreitung der Druckschwelle durch den Druck innerhalb des Batteriegehäuses die beiden Anschlüsse der Schalteinheit miteinander elektrisch kurzzuschließen und somit eine Stromversorgung der Druckmesseinheit über den ersten Stromversorgungspfad herzustellen, und bei Unterschreitung der Druckschwelle durch den Druck innerhalb des Batteriegehäuses die beiden Anschlüsse voneinander elektrisch zu trennen und somit die Stromversorgung der Druckmesseinheit über den ersten Stromversorgungspfad zu unterbrechen.

Bspw. weist die Anordnung ein Druckausgleichsventil zum Ausgleichen des Luftdrucks innerhalb des Batteriegehäuses auf, das wiederum eine unter Druckeinwirkung reversibel bewegliche oder reversibel/elastisch verformbare Membran aufweist. Dabei ist die Membran als Teil der Schalteinheit ausgebildet und eingerichtet, bei Überschreitung der Druckschwelle durch den Druck innerhalb des Batteriegehäuses durch eine durch die (steigende) Druckeinwirkung verursachte Bewegung oder durch eine durch die (steigende) Druckeinwirkung verursachte Verformung die beiden Anschlüsse der Schalteinheit miteinander elektrisch kurzzuschließen und somit eine Stromversorgung der Druckmesseinheit über den ersten Stromversorgungspfad herzustellen, und bei Unterschreitung der Druckschwelle durch den Druck innerhalb des Batteriegehäuses durch eine reversible Bewegung oder eine reversible Verformung die beiden Anschlüsse voneinander elektrisch zu trennen und somit die Stromversorgung der Druckmesseinheit über den ersten Stromversorgungspfad zu unterbrechen. Die Membran ist dabei mit einem elektrisch leitenden Material ausgestattet.

Die druckempfindliche Membran des primär zum Ausgleichen des Luftdrucks vorgehenden Druckausgleichsventils wird zur Drucküberwachung verwendet. Wird die Membran mit Überdruck innerhalb des Batteriegehäuses (der gleich oder höher als die Druckschwelle ist) beaufschlagt, verformt (dehnt) oder bewegt sich die Membran. Durch die Verformung bzw. Bewegung berührt die Membran mit ihrem elektrisch leitenden Material die beiden Anschlüsse der Schalteinheit und verbindet diese somit miteinander elektrisch.

Bspw. weist die Anordnung ferner einen Luft- bzw. Gasströmungskanal auf, der strömungstechnisch an dem zuvor genannten Druckausgleichsventil angeschlossen ist und eingerichtet ist, (insb. bei einem Überdruck innerhalb des Batteriegehäuses) Luft bzw. Gase aus dem Inneren des Batteriegehäuses in die Umgebung des Batteriegehäuses abzuführen. Ferner weist die Anordnung bspw. einen Luftmassensensor auf, der in dem Luftströmungskanal angeordnet ist, signalausgangsseitig an einem Messsignaleingang einer (bzw. der zuvor erwähnten) Messwerteauswerteschaltung der Druckmesseinheit signaltechnisch angeschlossen ist und eingerichtet ist, (insb. bei Überschreitung der Druckschwelle durch den Druck innerhalb des Batteriegehäuses) einen Massestrom der aus dem Batteriegehäuse über den Luftströmungskanal ausströmenden Gase/Luft zu messen und Messwerte an die Messwerteauswerteschaltung weiterzuleiten. Dabei ist die Messwerteauswerteschaltung bspw. ferner eingerichtet, (unter anderem) basierend auf den vom Luftmassensensor übermittelten Messwerten den Druck innerhalb des Batteriegehäuses zu ermitteln.

Bspw. weist die Anordnung ferner einen zweiten Stromversorgungspfad auf, der parallel zu dem ersten Stromversorgungspfad ausgeführt ist. Ferner weist die Anordnung ferner einen steuerbaren Schalter auf, der in dem zweiten Stromversorgungspfad elektrisch angeschlossen ist. Die Druckmesseinheit ist ferner zur Stromversorgung an dem zweiten Stromversorgungspfad seriell zu dem Schalter elektrisch angeschlossen. Der Schalter ist zwischen einem geschlossenen leitenden Schalzustand, in dem dieser eine Stromversorgung der Druckmesseinheit über den zweiten Stromversorgungspfad (durch das Batteriesystem bzw. dessen Batteriezellen) herstellt, und einem offenen sperrenden Schaltzustand, in dem dieser die Stromversorgung der Druckmesseinheit über den zweiten Stromversorgungspfad unterbricht, schaltbar ausgeführt.

Der Schalter ist insb. von der zuvor erwähnten Batteriemanagementanordnung steuerbar eingerichtet. Dabei ist die Batteriemanagementanordnung eingerichtet, in dem zuvor genannten Ruhemodus durch Öffnen des Schalters die Stromversorgung für die Druckmesseinheit über den zweiten Stromversorgungspfad zu unterbrechen. Darüber hinaus ist die Anordnung ist in einem aktiven Betriebsmodus betreibbar eingerichtet, wobei in dem aktiven Betriebsmodus die Batteriemanagementanordnung durch Schließen des Schalters die Stromversorgung für die Druckmesseinheit über den zweiten Strompfad (durch das Batteriesystem bzw. dessen Batteriezellen) herstellt, sodass die Druckmesseinheit über den zweiten Strompfad Strom (von dem Batteriesystem bzw. dessen Batteriezellen) zum Durchführen deren Funktionen einschließlich zum Messen des Drucks innerhalb des Batteriegehäuses erhält. In diesem Betriebsmodus misst die Druckmesseinheit den Druck innerhalb des Batteriegehäuses.

Gemäß einem zweiten Aspekt der Erfindung wird eine Batteriemanagementvorrichtung zum Betreiben eines Batteriesystems, insb. eines Traktionsbatteriesystems eines elektrisch angetriebenen Fahrzeugs, bereitgestellt, das ein Batteriegehäuse und eine Anzahl von innerhalb des Batteriegehäuses angeordneten Batteriezellen aufweist.

Die Batteriemanagementvorrichtung weist eine zuvor beschriebene Anordnung und eine zuvor erwähnte Batteriemanagementanordnung zum Betreiben des Batteriesystems auf. Dabei ist die Druckmesseinheit der Anordnung signalausgangsseitig mit der Batteriemanagementanordnung (bzw. mit einem Signaleingang der Batteriemanagementanordnung) signaltechnisch verbunden und ferner eingerichtet, Messwerte des Drucks innerhalb des Batteriegehäuses an die Batteriemanagementanordnung weiterzuleiten. Die Batteriemanagementanordnung ist ferner eingerichtet, anhand der übermittelten Messwerte (unter anderem) einen (bevorstehendes) kritischen Zustand, insb. ein (bevorstehendes) thermisches Durchgehen, bei dem Batteriesystems bzw. bei den Batteriezellen zu erkennen.

Bspw. ist die Batteriemanagementanordnung ferner über einen Steuersignalausgang an einem Steuersignalanschluss des Schalters signaltechnisch verbunden und eingerichtet,
in dem Ruhemodus der Anordnung den Schalter zu öffnen und somit die Stromversorgung für die Druckmesseinheit über den zweiten Stromversorgungspfad zu unterbrechen, und in dem aktiven Betriebsmodus den Schalter zu schließen und somit die Stromversorgung für die Druckmesseinheit über den zweiten Stromversorgungspfad herzustellen.

Bspw. ist die Batteriemanagementanordnung an dem ersten Stromversorgungspfad seriell zu der Schalteinheit und der Druckmesseinheit elektrisch angeschlossen. Dabei ist die Schalteinheit ferner eingerichtet, in dem elektrisch leitenden Schaltzustand über den ersten Stromversorgungspfad auch eine Stromversorgung der Batteriemanagementanordnung (neben der Druckmesseinheit) herzustellen und in dem elektrisch sperrenden Schaltzustand die Stromversorgung der Batteriemanagementanordnung über den ersten Stromversorgungspfad zu unterbrechen. In diesem Fall kann die Schalteinheit sowohl die Stromversorgung der Druckmesseinheit als auch der gesamten Batteriemanagementanordnung über den ersten Stromversorgungspfad autark und ohne Stromeigenverbrauch ausschließlich abhängig von einer Druckveränderung, insb. einem Druckanstieg, im Inneren des Batteriegehäuses steuern.

Gemäß einem dritten Aspekt der Erfindung wird ein Batteriesystem, insb. ein Traktionsbatteriesystem eines elektrisch angetriebenen Fahrzeugs, bereitgestellt.

Das Batteriesystem weist ein Batteriegehäuse und eine Anzahl von Batteriezellen auf, die innerhalb des Batteriegehäuses angeordnet sind. Ferner weist das Batteriesystem eine zuvor beschriebene Batteriemanagementvorrichtung zum Betreiben des Batteriesystems auf, wobei die Batteriemanagementanordnung ferner eingerichtet ist, mithilfe der oben beschriebenen Anordnung Druck innerhalb eines Batteriegehäuses des Batteriesystems zu überwachen und darauf basierend unter anderem kritischen Zustand, insb. ein thermisches Durchgeben, bei dem Batteriesystem bzw. den Batteriezellen zu erkennen.

Vorteilhafte Ausgestaltungen der oben beschriebenen Anordnung sind, soweit im Übrigen, auf die oben genannte Batteriemanagementvorrichtung bzw. auf das oben genannte Batteriesystem übertragbar, auch als vorteilhafte Ausgestaltungen der oben genannten Batteriemanagementvorrichtung bzw. des oben genannten Batteriesystems anzusehen.

### Kurze Beschreibung der Zeichnung:

Im Folgenden werden beispielhafte Ausführungsformen der Erfindung Bezug nehmend auf die beiliegende Zeichnung näher erläutert. Dabei zeigen:
- Figur 1: in einer ersten schematischen Darstellung ein Batteriesystem (bzw. ein Teil davon) mit einem Teil einer Batteriemanagementvorrichtung gemäß einer beispielhaften Ausführungsform der Erfindung;
- Figur 2: in einer zweiten schematischen Darstellung ein Teil einer Batteriemanagementvorrichtung aus Figur 1 gemäß einer weiteren beispielhaften Ausführungsform der Erfindung;
- Figur 3: in einer dritten schematischen Darstellung ein Teil einer Batteriemanagementvorrichtung aus Figur 1 gemäß noch einer weiteren beispielhaften Ausführungsform der Erfindung; und
- Figur 4: in einer vierten schematischen Darstellung ein Batteriesystem (bzw. ein Teil davon) mit einem Teil einer Batteriemanagementvorrichtung gemäß einer weiteren beispielhaften Ausführungsform der Erfindung.

### Detaillierte Beschreibung der Zeichnung:

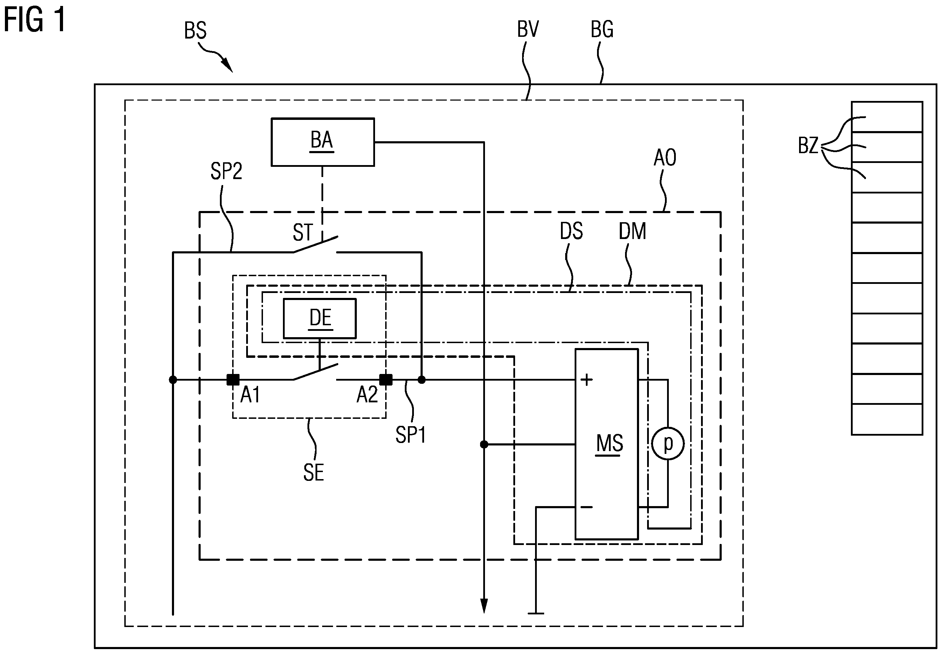

Figur 1 zeigt in einer schematischen Darstellung ein Batteriesystem BS (bzw. ein Teil davon) mit einer Batteriemanagementvorrichtung BV (bzw. jeweils ein Teil davon) gemäß einer ersten beispielhaften Ausführungsform der Erfindung.

Das Batteriesystem BS ist in dieser Ausführungsform als ein Traktionsbatteriesystem eines elektrisch angetriebenen Fahrzeugs ausgebildet. Das Batteriesystem BS weist ein Batteriegehäuse BG und eine Vielzahl von Batteriezellen BZ auf. Die Batteriezellen BZ sind in dem Batteriegehäuse BG angeordnet und werden von dem Batteriegehäuse BG auch vor mechanischen und sonstigen äußeren Einflüssen geschützt. Als Batteriezellen BZ werden Lithium-Ionen-Batteriezellen, bspw. in Form von Pouch-Zellen, verbaut.

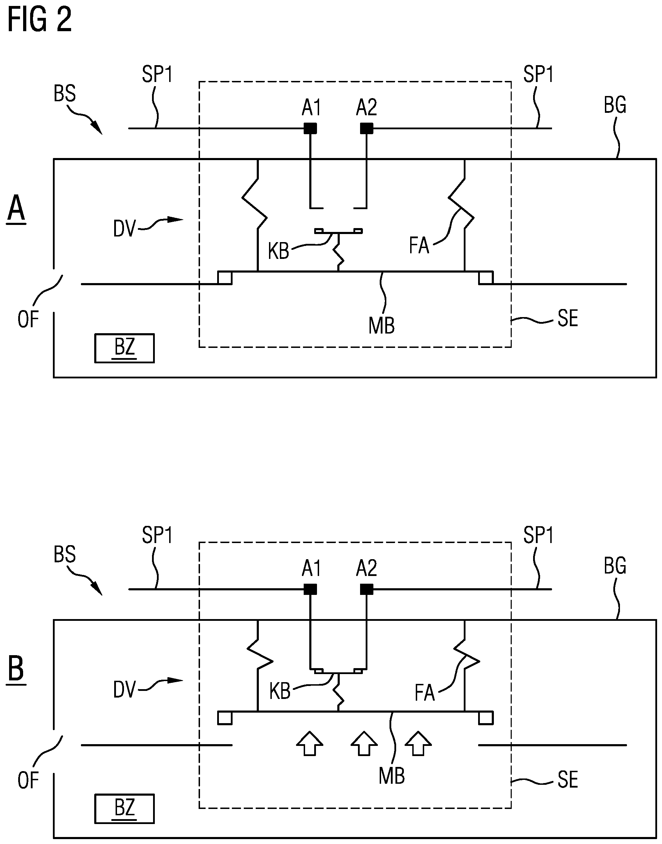

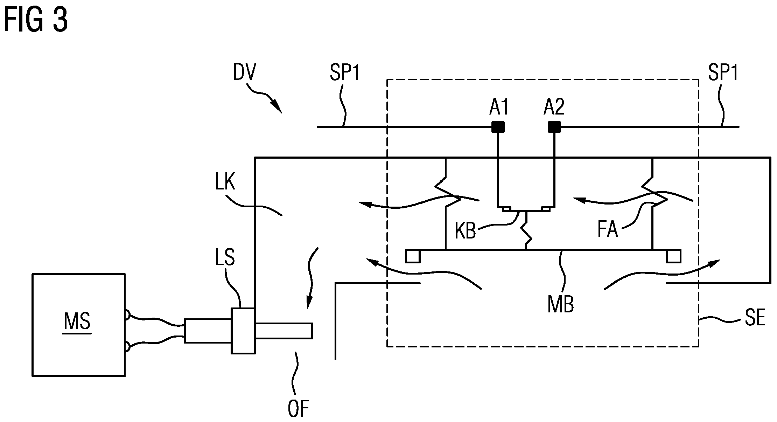

Das Batteriegehäuse BG weist an der Gehäusewand Öffnungen OF (vergleich mit Figuren 2 und 3) auf, durch die Luft bzw. Gas zwischen dem Inneren des Batteriegehäuses BG und der Umgebung des Batteriegehäuses BG strömen kann. Durch die Öffnungen OF wird der Luft- bzw. Gasdruck im Inneren des Batteriegehäuses BG dem Luftdruck in der Umgebung des Batteriegehäuses BG angeglichen.

Die Batteriemanagementvorrichtung BV ist ebenfalls in dem Batteriegehäuse BG angeordnet und dient dazu, den Zustand des Batteriesystems BS zu ermitteln bzw. zu überwachen und das Batteriesystem BS entsprechend dem ermittelten Zustand und basierend auf den Anforderungen einer übergeordneten zentralen Steuervorrichtung des Fahrzeugs zu betreiben. Dabei betreibt die Batteriemanagementvorrichtung BV das Batteriesystem BS bzw. die Batteriezellen BZ des Batteriesystems BS in einer Art und Weise, dass die Batteriezellen BZ möglichst geschont betrieben werden, insb. vor einer Überladung oder einer Tiefentladung geschützt werden. Hierzu weist die Batteriemanagementvorrichtung BV eine Batteriemanagementanordnung BA auf, die unter anderem steuerbare Schalter oder steuer-/regelbare Gleichspannungswandler aufweist, die jeweils einer der Batteriezellen BZ vorgeschaltet sind und den jeweiligen Batteriezellen BZ zugeordnet sind. Die Batteriemanagementanordnung BA ist eingerichtet, basierend auf den ermittelten Zuständen der jeweiligen korrespondierenden Batteriezellen BZ und auf der Anforderung der Batteriemanagementvorrichtung BV die zugeordneten Schalter bzw. Gleichspannungswandler der jeweiligen Batteriezellen BZ zu steuern bzw. zu regeln, sodass die Batteriezellen BZ schonend betrieben werden und vor Ausfällen geschützt werden.

Trotz des schützenden Batteriegehäuses BG sind die Batteriezellen BZ vielen äußeren Einflüssen, wie z. B. hohen Umgebungstemperaturen bzw. starken Temperaturschwankungen oder starken mechanischen Vibrationen insb. aufgrund der Anwendung in Fahrzeugen, ausgesetzt, welche die Funktionstüchtigkeit der Batteriezellen BZ beeinträchtigen und gar zu vorzeitigen Ausfällen der Batteriezellen BZ führen können.

Darüber hinaus unterliegen die Batteriezellen BZ wie nahezu alle technischen Komponenten einem unvermeidbaren Alterungsprozess, welcher zusätzlich zu den oben genannten Einflüssen die Funktionstüchtigkeit der Batteriezellen BZ beeinträchtigt und zu vorzeitigen Ausfällen der Batteriezellen BZ führen kann.

Außerdem weisen Batteriezellen BZ an sich aufgrund deren Beschaffenheit und Materialzusammensetzung diverse Gefährdungspotenziale auf. Eins der Gefährdungspotenziale, die von den Batteriezellen BZ wie den Lithium-Ionen-Batteriezellen ausgehen, ist das so genannte thermische Durchgehen (auf Englisch "Thermal Runaway"). Aufgrund ihrer chemischen Zusammensetzung können sich die Batteriezellen BZ bei bestimmten Situationen, wie z. B. bei einer mechanischen Beschädigung oder einem elektrischen Kurzschluss, unkontrollierbar überhitzen, was wiederum zu Brand oder Explosion des gesamten Batteriesystems BS führen kann.

Um die Funktionstüchtigkeit der Batteriezellen BZ und somit des Batteriesystems BS zu überwachen und bevorstehende Ausfälle der Batteriezellen BZ und Gefahren wie ein (drohendes) thermisches Durchgehen durch die Batteriezellen BZ möglichst frühzeitig erkennen und geeignete Maßnahmen einleiten zu können, weist die Batteriemanagementvorrichtung BV eine Anordnung AO zur Überwachung des (Luft- bzw. Gas-)Drucks innerhalb des Batteriegehäuses BG des Batteriesystems BS auf.

Die Anordnung AO weist eine Druckmesseinheit DM zum Messen des Drucks innerhalb des Batteriegehäuses BG und eine druckempfindliche mechanische Schalteinheit SE auf. Ferner weist die Anordnung AO einen ersten Stromversorgungspfad SP1 auf, der zur Stromversorgung der Druckmesseinheit DM die Druckmesseinheit DM mit einer Gruppe von ausgewählten zueinander seriell elektrisch angeschlossenen Batteriezellen BZ elektrisch verbindet. Dabei stellen diese ausgewählten Batteriezellen BZ eine zum Betrieb der Druckmesseinheit DM erforderliche Nennspannung von bspw. 5 oder 12 Volt bereit. In diesem ersten Stromversorgungspfad SP1 sind die Druckmesseinheit DM und die Schalteinheit SE zueinander seriell elektrisch angeschlossen. Die Druckmesseinheit DM und die Schalteinheit SE sind zudem innerhalb des Batteriegehäuses BG angeordnet.

Die Schalteinheit SE weist ferner zwei elektrische Anschlüsse A1, A2 auf und ist über diese beiden Anschlüsse A1, A2 an dem ersten Stromversorgungspfad SP1 seriell zu der Druckmesseinheit DM elektrisch angeschlossen.

Die Druckmesseinheit DM weist einen Drucksensor DS mit einem druckempfindlichen mikroelektromechanischen Element DE auf, wobei das mikroelektromechanische Element DE als Teil der Schalteinheit SE ausgebildet ist. Die Druckmesseinheit DM weist ferner eine Messwerteauswerteschaltung MS auf, die signaleingangsseitig an einem Signalausgang des Drucksensors DS signaltechnisch verbunden ist und signalausgangsseitig mit einem Signaleingang der Batteriemanagementanordnung BA signaltechnisch verbunden ist.

Die Anordnung AO weist ferner einen zweiten Stromversorgungspfad SP2 auf, der parallel zu dem ersten Stromversorgungspfad SP1 ausgeführt ist und somit die Druckmesseinheit DM mit der zuvor genannten Batteriezellengruppe elektrisch verbindet. Die Anordnung AO weist ferner einen steuerbaren Schalter ST in Form von bspw. eines Halbleiterschalters, auf, der in dem zweiten Stromversorgungspfad SP2 seriell zu der Druckmesseinheit DM elektrisch angeschlossen ist. Dabei ist der Schalter ST zwischen einem geschlossenen leitenden Schalzustand, in dem dieser eine Stromversorgung der Druckmesseinheit DM über den zweiten Stromversorgungspfad SP2 herstellt, und einem offenen sperrenden Schaltzustand, in dem dieser die Stromversorgung der Druckmesseinheit DM über den zweiten Stromversorgungspfad SP2 unterbricht, schaltbar ausgeführt. Bei Bedarf kann die Druckmesseinheit DM somit anstatt von dem ersten Stromversorgungspfad SP1 auch von dem zweiten Stromversorgungspfad SP2 mit Strom versorgt werden. Die Steuerung des Schalters ST erfolgt dabei durch die Batteriemanagementanordnung BA, die über eine Steuersignalverbindung mit einem Steueranschluss des Schalters ST signaltechnisch verbunden ist.

Nachdem der Aufbau der Batteriemanagementvorrichtung BV, insb. der Anordnung AO zur Drucküberwachung, anhand von Figur 1 detailliert beschrieben wurde, wird nachfolgend deren Funktionsweise näher beschrieben:
Das Batteriesystem BS und somit auch die Batteriemanagementvorrichtung BV samt der Anordnung AO sind einem aktiven Betriebsmodus und in einem Ruhemodus betreibbar ausgeführt.

In einem aktiven Betriebsmodus stellt das Batteriesystem BS bspw. zum Antrieb des Fahrzeugs oder zum Durchführen von bspw. fahrzeugkomfort-relevanten Funktionen des Fahrzeugs, wie z. B. zum Betreiben einer Standheizung oder eines Navigationsgerätes des Fahrzeugs, eine "große" Menge an Strom bereit, oder wird an einer Ladestation angeschlossen und aufgeladen oder wird durch Rekuperation mit Bremsenergie des Fahrzeugs aufgeladen.

In diesem Betriebsmodus des Batteriesystems BS befindet sich die Batteriemanagementvorrichtung BV ebenfalls in dem Betriebsmodus und steuert das Batteriesystem BS und regelt den Stromfluss von bzw. zu den einzelnen Batteriezellen BZ des Batteriesystems BS. Darüber hinaus steuert die Batteriemanagementvorrichtung BV bzw. die Batteriemanagementanordnung BA die Anordnung AO bzw. deren Druckmesseinheit DM, sodass diese kontinuierlich und in regelmäßigen kurzen zeitlichen Abständen von bspw. einigen bis einigen Zehn Millisekunden den Luft-/Gasdruck im Inneren des Batteriegehäuses BG misst und die Messwerte (insb. unbearbeitet) direkt an die

Batteriemanagementanordnung BA weiterleitet. Die Batteriemanagementanordnung BA wertet die übertragenen Messwerte in einer dem Fachmann bekannten Weise aus (bspw. durch Vergleich mit einem vorgegebenen kritischen Druckschwellwert) und analysiert darauf basierend den Zustand des Batteriesystems BS. Ferner erkennt die Batteriemanagementanordnung BA basierend auf den Analyseergebnissen unter anderem, ob ein kritischer Zustand, wie z. B. ein Überdruck im Inneren des Batteriegehäuses BG infolge eines thermischen Durchgehens, vorliegt. Im Falle, dass ein kritischer Zustand erkannt wird, gibt die Batteriemanagementanordnung BA ein Warnsignal an die Batteriemanagementvorrichtung BV raus und veranlasst somit die Batteriemanagementvorrichtung BV, das gesamte Batteriesystem BS abzuschalten und/oder weitere geeignete Maßnahmen einzuleiten.

In diesem Betriebsmodus schaltet die Batteriemanagementanordnung BA den Schalter ST ein und stellt somit eine Stromversorgung für die Druckmesseinheit DM über den zweiten Stromversorgungspfad SP2 her. Über diesen zweiten Stromversorgungspfad SP2 bezieht die Druckmesseinheit DM von der zuvor genannten Batteriezellengruppe Strom für deren Funktionen und belastet somit diese Batteriezellengruppe.

Solange der Luft-/Gasdruck im Inneren des Batteriegehäuses BG unter einer vorgegebenen Druckschwelle (die niedriger als der zuvor genannte kritische Druckschwellwert ist) liegt, bleibt die Schalteinheit SE in einem elektrisch sperrenden Schaltzustand.

Übersteigt der Luftdruck im Inneren des Batteriegehäuses BG bspw. infolge eines thermischen Durchgehens bei einer oder anderen Batteriezellen BZ den oben genannten kritischen Druckschwellwert, so erkennt die Batteriemanagementanordnung BA durch den Vergleich der von der Druckmesseinheit DM gemessen und übermittelten Druckmesswerte mit dem genannten kritischen Druckschwellwert, dass ein thermisches Durchgehen vorliegt, und gibt das Warnsignal raus.

In einem Ruhemodus ist das Fahrzeug abgestellt. In dem Ruhemodus wird weder von dem Batteriesystem BS wird Strom bzw. eine "große" Menge an Strom abgenommen, noch dem Batteriesystem BS Strom zugeführt. In diesem Ruhemodus A werden nur sicherheitsrelevante Funktionen des Fahrzeugs, wie z. B. eine Funktion zum Diebstahlschutz, ausgeführt.

Bei der Batteriemanagementvorrichtung BV werden meiste, insb. nicht sicherheitsrelevante, Funktionen, heruntergefahren. Entsprechend wird die Druckmesseinheit DM in den Ruhemodus gebracht, in dem diese keinen Luft-/Gasdruck mehr misst. Hierzu schaltet die Batteriemanagementanordnung BA den Schalter ST aus und unterbricht somit die Stromversorgung für die Druckmesseinheit DM über den zweiten Stromversorgungspfad SP2.

Die Batteriemanagementanordnung BA wird vorzugsweise weiterhin in dem Betriebsmodus gehalten, in dem diese sicherheitsrelevante Funktionen weiter durchführt.

Die Zustands- bzw. Drucküberwachung bei dem Batteriesystem BS erfolgt in diesem Ruhemodus (ausschließlich) stromlos und autark durch die Schalteinheit SE mit ihrem druckempfindlichen mikroelektromechanischen Element DE. Dabei ist das druckempfindliche Element DE derart eingestellt, dass dieses bei Einwirkung des Luft-/Gasdrucks sich bewegt, verformt oder in einer sonstigen vergleichbaren Weise dessen elektromechanische Eigenschaft ändert. Überschreitet der Luft-/Gasdruck im Inneren des Batteriegehäuses BS die vorab bestimmte Druckschwelle, so bewegt oder verformt sich das Element DE oder ändert dessen elektromechanische Eigenschaft derart, dass es die beiden Anschlüsse A1, A2 der Schalteinheit SE miteinander elektrisch kurzschließt. Als Ergebnis wird die Stromversorgung für die Druckmesseinheit DM über den ersten Stromversorgungspfad SP1 durch die oben genannte Batteriezellengruppe hergestellt. Mit dem Strom versorgt führt die Druckmesseinheit DM eine genauere Messung des Luft-/Gasdrucks im Inneren des Batteriegehäuses BG und leitet die Messwerte an die Batteriemanagementanordnung BA weiter. Erhält die Batteriemanagementanordnung BA die Messwerte von der Druckmesseinheit DM, so überprüft diese bspw. durch den Vergleich der Messwerte mit dem vorgegebenen kritischen Druckschwellwert, ob tatsächlich ein kritischer Zustand, wie z. B. ein thermisches Durchgehen, bei dem Batteriesystem BS vorliegt.

Solange der Luft-/Gasdruck im Inneren des Batteriegehäuses BG unter der oben genannten Druckschwelle des druckempfindlichen Elements DE liegt, bleibt dies in einer Form, einer Position bzw. in einer elektromechanischen Eigenschaft, in der es die beiden Anschlüsse A1, A2 der Schalteinheit SE nicht miteinander elektrisch kurzschließt. Entsprechend bleibt der erste Stromversorgungspfad SP1 offen und die Druckmesseinheit DM erhält auch keinen Strom über den ersten Stromversorgungspfad SP1.

In einer alternativen in den Figuren nicht dargestellten Ausführungsform ist die Batteriemanagementanordnung BA an dem ersten Stromversorgungspfad SP1 seriell zu der Schalteinheit SE und der Druckmesseinheit DM elektrisch angeschlossen. In diesem Fall ist die Schalteinheit SE eingerichtet, in dem elektrisch leitenden Schaltzustand eine Stromversorgung der Batteriemanagementanordnung BA über den ersten Stromversorgungspfad SP1 herzustellen und in dem elektrisch sperrenden Schaltzustand die Stromversorgung der Batteriemanagementanordnung BA über den ersten Stromversorgungspfad SP1 zu unterbrechen. Entsprechend wird die Batteriemanagementanordnung BA in einem Ruhemodus des Batteriesystems BS ebenfalls in den Ruhemodus gebracht und wird erst in den Betriebsmodus aktiviert, wenn die Schalteinheit SE bzw. dessen druckempfindliche Element DE im Inneren des Batteriegehäuses BG einen Überdruck bzw. einen Luft-/Gasdruck höher als die Druckschwelle erfasst bzw. die Stromversorgung über den ersten Stromversorgungspfad SP1 herstellt.

Figur 2 zeigt in einer zweiten schematischen Darstellung ein Teil einer Batteriemanagementvorrichtung BV aus Figur 1 gemäß einer weiteren beispielhaften Ausführungsform der Erfindung.

In dieser Ausführungsform weist die Anordnung AO der Batteriemanagementvorrichtung BV ein Druckausgleichsventil DV auf, das an der zuvor genannten Öffnung OF des Batteriegehäuses BG angeordnet ist und eingerichtet ist, bei einem Überdruck im Inneren des Batteriegehäuses BG Gase aus dem Batteriegehäuse in die Umgebung des Batteriegehäuses abzuführen. Das Druckausgleichsventil DV weist eine Membran MB auf, dass unter Druckeinwirkung reversibel beweglich oder reversibel/elastisch verformbar ausgeführt ist. Durch die Bewegung bzw. Verformung öffnet die Membran MB das Druckausgleichsventil DV, wodurch die Gase aus dem Batteriegehäuse in die Umgebung des Batteriegehäuses abgeführt werden. Dabei ist die Membran MB als Teil der Schalteinheit SE ausgebildet und über zwei oder mehr Federarme FA federnd an einer Gehäusewand im Bereich der zuvor genannten Öffnung OF gehalten. Dabei halten die Federarme FA die Membran MB in einer schließenden Position, in der die Membran MB die Öffnung OF schließt und somit eine Luft-/Gasströmung zwischen dem Inneren des Batteriegehäuses BG und der Umgebung des Batteriegehäuses BG unterbricht (sowie im Abschnitt A der Figur 2 veranschaulicht ist). Bei einem Überdruck im Inneren des Batteriegehäuses BG wird die Membran MB durch die Druckkraft des Überdrucks im Inneren des Batteriegehäuses BG (die höher als die Federkraft der Federarme FA ist) in einer öffnenden Position gedrückt, in der diese die Öffnung OF öffnet und somit eine Luft-/Gasströmung aus dem Inneren des Batteriegehäuses BG in die Umgebung des Batteriegehäuses BG ermöglicht (sowie mit Pfeilen im Abschnitt B der Figur 2 veranschaulicht ist).

Die Membran MB weist ferner ein dünnes Kupferblech KB auf, das bei einer öffnenden Position der Membran MB (bei Überschreitung der Druckschwelle durch den Druck Inneren des Batteriegehäuses BG) die beiden Anschlüsse A1, A2 der Schalteinheit SE berührt und somit die beiden Anschlüsse A1, A2 miteinander elektrisch kurzschließt, wodurch die Stromversorgung für die Druckmesseinheit DM über den ersten Stromversorgungspfad SP1 hergestellt wird (sowie im Abschnitt B der Figur 2 veranschaulicht ist). In der schließenden Position der Membran MB (bei Unterschreitung der Druckschwelle durch den Druck Inneren des Batteriegehäuses BG) führen die Federelemente FA der Membran MB das Kupferblech KB von den beiden Anschlüssen A1, A2 weg, sodass die elektrische Verbindung über die beiden Anschlüsse A1, A2 und somit auch die Stromversorgung für die Druckmesseinheit DM über den ersten Stromversorgungspfad SP1 unterbrochen werden (sowie im Abschnitt A der Figur 2 veranschaulicht ist).

Figur 3 zeigt in einer zweiten schematischen Darstellung eine Weiterentwicklung der in Figur 2 dargestellten Anordnung AO.

Die Anordnung AO in Figur 3 weist zusätzlich zu dem Druckausgleichsventil DV noch einen Luftströmungskanal LK zum Abführen von Gasen aus dem Batteriegehäuse BG in die Umgebung des Batteriegehäuses BG, der strömungstechnisch an dem Druckausgleichsventil DV angeschlossen ist. Ferner weist die Anordnung AO noch einen Luftmassensensor LS auf, der in dem Luftströmungskanal LK angeordnet ist. Dabei ist der Luftmassensensor LS signalausgangsseitig an einem Messsignaleingang einer Messwerteauswerteschaltung MS der Druckmesseinheit DM signaltechnisch angeschlossen und eingerichtet, einen Massestrom der aus dem Batteriegehäuse BG über den Luftströmungskanal LK ausströmenden Gase (sowie mit Pfeilen im Abschnitt B der Figur 3 veranschaulicht ist) zu messen und Messwerte an die Messwerteauswerteschaltung MS weiterzuleiten. In diesem Fall ist die Messwerteauswerteschaltung MS ferner eingerichtet, basierend auf den vom Luftmassensensor LS übermittelten Massestrommesswerten und den von der Druckmesseinheit DM übermittelten Druckmesswerten den genauen Luft-/Gasdruck innerhalb des Batteriegehäuses BG zu ermitteln.

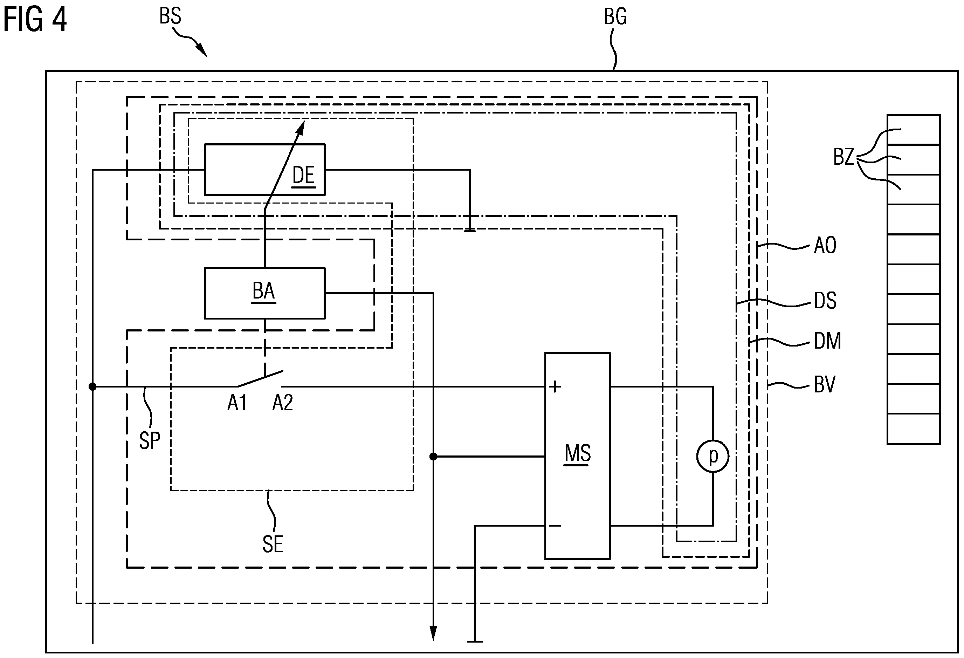

Figur 4 zeigt in einer vierten schematischen Darstellung ein Batteriesystem BS (bzw. ein Teil davon) mit einem Teil einer Batteriemanagementvorrichtung BV gemäß einer weiteren beispielhaften Ausführungsform der Erfindung.

Die in Figur 4 dargestellte Batteriemanagementvorrichtung BV unterscheidet sich von der in Figur 1 dargestellten Batteriemanagementvorrichtung BV dadurch, dass das druckempfindliche mikroelektromechanische Element DE der Schalteinheit SE derart ausgeführt ist, dass diese bei Überschreitung der Druckschwelle durch den Druck Inneren des Batteriegehäuses BG direkt die Batteriemanagementanordnung BA von dem Ruhemodus in den aktiven Betriebsmodus aufweckt, die zuvor in dem Ruhemodus des Batteriesystems BS ebenfalls in den Ruhemodus übergeht. In den Betriebsmodus aufgewacht steuert die Batteriemanagementanordnung BA die Schalteinheit SE derart, dass diese die beiden Anschlüsse A1, A2 miteinander elektrisch verbindet und somit die Stromversorgung für die Druckmesseinheit DM über den ersten Stromversorgungspfad SP1 herstellt.

## Patentansprüche

1. Anordnung (AO) zur Drucküberwachung innerhalb eines Batteriegehäuses (BG) eines Batteriesystems (BS), aufweisend:
- einen ersten Stromversorgungspfad (SP1);
- eine Druckmesseinheit (DM) zum Messen eines Drucks innerhalb des Batteriegehäuses (BG), die zur Stromversorgung an dem ersten Stromversorgungspfad (SP1) elektrisch angeschlossen ist;
- eine druckempfindliche mechanische Schalteinheit (SE), die innerhalb des Batteriegehäuses (BG) angeordnet ist und über zwei elektrische Anschlüsse (A1, A2) an dem ersten Stromversorgungspfad (SP1) seriell zu der Druckmesseinheit (DM) elektrisch angeschlossen ist;
- wobei die Schalteinheit (SE) eingerichtet ist, bei Überschreitung einer vorgegebenen Druckschwelle durch den Druck innerhalb des Batteriegehäuses (BG) in einen elektrisch leitenden Schaltzustand zu schalten und somit eine Stromversorgung der Druckmesseinheit (DM) über den ersten Stromversorgungspfad (SP1) herzustellen, und bei Unterschreitung der Druckschwelle durch den Druck innerhalb des Batteriegehäuses (BG) in einen elektrisch sperrenden Schaltzustand zu schalten und somit die Stromversorgung der Druckmesseinheit (DM) über den ersten Stromversorgungspfad (SP1) zu unterbrechen.

2. Anordnung (AO) nach Anspruch 1,
- wobei die Anordnung (AO) in einem Ruhemodus betreibbar ausgeführt ist, in dem die Anordnung (AO) die Stromversorgung für die Druckmesseinheit (DM) unterbricht und die Druckmesseinheit (DM) den Druck nicht misst;
- wobei die Schalteinheit (SE) ferner eingerichtet ist,
• in dem Ruhemodus der Anordnung (AO) und bei Überschreitung der vorgegebenen Druckschwelle durch den Druck innerhalb des Batteriegehäuses (BG) in den elektrisch leitenden Schaltzustand zu schalten, und
• in dem Ruhemodus der Anordnung (AO) und bei Unterschreitung der Druckschwelle durch den Druck innerhalb des Batteriegehäuses (BG) in den elektrisch sperrenden Schaltzustand zu schalten.

3. Anordnung (AO) nach einem der vorangehenden Ansprüche, wobei die Druckschwelle unter einem kritischen Druckschwellwert liegt, wobei bei Überschreitung dieses kritischen Druckschwellwertes durch den Druck innerhalb des Batteriegehäuses (BG) ein kritischer Zustand bei dem Batteriesystem (BS) vorliegt.

4. Anordnung (AO) nach einem der vorangehenden Ansprüche, wobei die Druckmesseinheit (DM) einen Drucksensor (DS) mit einem druckempfindlichen mikroelektromechanischen Element (DE) aufweist, wobei das mikroelektromechanische Element (DE) als Teil der Schalteinheit (SE) ausgebildet ist und eingerichtet ist, bei Überschreitung der Druckschwelle durch den Druck innerhalb des Batteriegehäuses (BG) die beiden Anschlüsse (A1, A2) miteinander elektrisch kurzzuschließen, und bei Unterschreitung der Druckschwelle durch den Druck innerhalb des Batteriegehäuses (BG) die beiden Anschlüsse (A1, A2) voneinander elektrisch zu trennen.

5. Anordnung (AO) nach einem der vorangehenden Ansprüche, ferner aufweisend:
- ein Druckausgleichsventil (DV) zum Abführen von Gasen aus dem Batteriegehäuse (BG);
- das Druckausgleichsventil (DV) eine unter Druckeinwirkung reversibel bewegliche oder verformbare Membran (MB) aufweist;
- die Membran (MB) als Teil der Schalteinheit (SE) ausgebildet ist und eingerichtet ist, bei Überschreitung der Druckschwelle durch den Druck innerhalb des Batteriegehäuses (BG) durch eine durch die Druckeinwirkung verursachte Bewegung oder durch eine durch die Druckeinwirkung verursachte Verformung die beiden Anschlüsse (A1, A2) der Schalteinheit (SE) miteinander elektrisch kurzzuschließen, und bei Unterschreitung der Druckschwelle durch den Druck innerhalb des Batteriegehäuses (BG) die beiden Anschlüsse (A1, A2) voneinander elektrisch zu trennen.

6. Anordnung (AO) nach Anspruch 5, ferner aufweisend:
- einen Luftströmungskanal (LK) zum Abführen von Gasen aus dem Batteriegehäuse (BG) in die Umgebung des Batteriegehäuses (BG), der strömungstechnisch an dem Druckausgleichsventil (DV) angeschlossen ist;
- einen Luftmassensensor (LS), der in dem Luftströmungskanal (LK) angeordnet ist, signalausgangsseitig an einem Messsignaleingang einer Messwerteauswerteschaltung (MS) der Druckmesseinheit (DM) signaltechnisch angeschlossen ist und eingerichtet ist, einen Massestrom der aus dem Batteriegehäuse (BG) über den Luftströmungskanal (LK) ausströmenden Gase zu messen und Messwerte an die Messwerteauswerteschaltung (MS) weiterzuleiten;
- wobei die Messwerteauswerteschaltung (MS) ferner eingerichtet ist, basierend auf den vom Luftmassensensor (LS) übermittelten Messwerten den Druck innerhalb des Batteriegehäuses (BG) zu ermitteln.

7. Anordnung (AO) nach einem der vorangehenden Ansprüche, ferner aufweisend:
- einen zweiten Stromversorgungspfad (SP2), der parallel zu dem ersten Stromversorgungspfad (SP1) ausgeführt ist;
- einen steuerbaren Schalter (ST), der in dem zweiten Stromversorgungspfad (SP2) elektrisch angeschlossen ist;
- wobei die Druckmesseinheit (DM) zur Stromversorgung an dem zweiten Stromversorgungspfad (SP2) seriell zu dem Schalter (ST) elektrisch angeschlossen ist;
- wobei der Schalter (ST) zwischen einem geschlossenen leitenden Schalzustand, in dem dieser eine Stromversorgung der Druckmesseinheit (DM) über den zweiten Stromversorgungspfad (SP2) herstellt, und einem offenen sperrenden Schaltzustand, in dem dieser die Stromversorgung der Druckmesseinheit (DM) über den zweiten Stromversorgungspfad (SP2) unterbricht, schaltbar ausgeführt ist.

8. Batteriemanagementvorrichtung (BV) zum Betreiben eines Batteriesystems (BS) mit einem Batteriegehäuse (BG) und einer Anzahl von innerhalb des Batteriegehäuses (BG) angeordneten Batteriezellen (BZ), aufweisend:
- eine Anordnung (AO) nach einem der vorangehenden Ansprüche;
- eine Batteriemanagementanordnung (BA) zum Betreiben des Batteriesystems (BS);
- wobei die Druckmesseinheit (DM) signalausgangsseitig mit der Batteriemanagementanordnung (BA) signaltechnisch verbunden ist und ferner eingerichtet ist, Messwerte des Drucks innerhalb des Batteriegehäuses (BG) an die Batteriemanagementanordnung (BA) weiterzuleiten;
- wobei die Batteriemanagementanordnung (BA) ferner eingerichtet ist, anhand der übermittelten Messwerte einen kritischen Zustand bei dem Batteriesystem (BS) zu erkennen.

9. Batteriemanagementvorrichtung (BV) nach Anspruch 8, wobei die Batteriemanagementanordnung (BA) ferner über einen Steuersignalausgang an einem Steuersignalanschluss des Schalters (ST) signaltechnisch verbunden ist und eingerichtet ist, in dem Ruhemodus den Schalter (ST) zu öffnen und somit die Stromversorgung für die Druckmesseinheit (DM) über den zweiten Stromversorgungspfad (SP2) zu unterbrechen.

10. Batteriemanagementvorrichtung (BV) nach Anspruch 8,
- wobei die Batteriemanagementanordnung (BA) an dem ersten Stromversorgungspfad (SP1) seriell zu der Schalteinheit (SE) und der Druckmesseinheit (DM) elektrisch angeschlossen ist;
- wobei die Schalteinheit (SE) ferner eingerichtet ist, in dem elektrisch leitenden Schaltzustand eine Stromversorgung der Batteriemanagementanordnung (BA) über den ersten Stromversorgungspfad (SP1) herzustellen und in dem elektrisch sperrenden Schaltzustand die Stromversorgung der Batteriemanagementanordnung (BA) über den ersten Stromversorgungspfad (SP1) zu unterbrechen.

11. Batteriesystem (BS), aufweisend:
- ein Batteriegehäuse (BG) und eine Anzahl von innerhalb des Batteriegehäuses (BG) angeordneten Batteriezellen (BZ);
- eine Batteriemanagementvorrichtung (BV) nach einem der Ansprüche 8 bis 10 zum Betreiben des Batteriesystems (BS);
- wobei die Batteriemanagementanordnung (BA) ferner eingerichtet ist, mithilfe der Anordnung (AO) den Druck innerhalb eines Batteriegehäuses (BG) des Batteriesystems (BS) zu überwachen.

## Claims

1. Arrangement (AO) for pressure monitoring within a battery housing (BG) of a battery system (BS), comprising:
- a first power supply path (SP1);
- a pressure measuring unit (DM) for measuring a pressure within the battery housing (BG), which pressure measuring unit is electrically connected to the first power supply path (SP1) for power supply purposes;
- a pressure-sensitive mechanical switching unit (SE), which is arranged within the battery housing (BG) and is electrically connected, in series with the pressure measuring unit (DM), to the first power supply path (SP1) via two electrical terminals (A1, A2);
- wherein the switching unit (SE) is set up to switch to an electrically conductive switching state when the pressure within the battery housing (BG) exceeds a predefined pressure threshold and thus to establish a supply of power to the pressure measuring unit (DM) via the first power supply path (SP1), and to switch to an electrically blocking switching state when the pressure within the battery housing (BG) falls below the pressure threshold and thus to interrupt the supply of power to the pressure measuring unit (DM) via the first power supply path (SP1).

2. Arrangement (AO) according to Claim 1,
- wherein the arrangement (AO) is designed to be operable in an idle mode in which the arrangement (AO) interrupts the supply of power for the pressure measuring unit (DM) and the pressure measuring unit (DM) does not measure the pressure;
- wherein the switching unit (SE) is furthermore set up
• to switch to the electrically conductive switching state in the idle mode of the arrangement (AO) and when the pressure within the battery housing (BG) exceeds the predefined pressure threshold, and
• to switch to the electrically blocking switching state in the idle mode of the arrangement (AO) and when the pressure within the battery housing (BG) falls below the pressure threshold.

3. Arrangement (AO) according to either of the preceding claims, wherein the pressure threshold is below a critical pressure threshold value, wherein the battery system (BS) is in a critical state when the pressure within the battery housing (BG) exceeds this critical pressure threshold value.

4. Arrangement (AO) according to one of the preceding claims, wherein the pressure measuring unit (DM) comprises a pressure sensor (DS) having a pressure-sensitive microelectromechanical element (DE), wherein the microelectromechanical element (DE) is formed as part of the switching unit (SE) and is set up to electrically short the two terminals (A1, A2) to one another when the pressure within the battery housing (BG) exceeds the pressure threshold, and to electrically disconnect the two terminals (A1, A2) from one another when the pressure within the battery housing (BG) falls below the pressure threshold.

5. Arrangement (AO) according to one of the preceding claims, further comprising:
- a pressure equalization valve (DV) for discharging gases from the battery housing (BG);
- the pressure equalization valve (DV) comprises a membrane (MB) that is reversibly movable or deformable under the action of pressure;
- the membrane (MB) is formed as part of the switching unit (SE) and is set up so as, by way of a movement caused by the action of pressure or by way of a deformation caused by the action of pressure, to electrically short the two terminals (A1, A2) of the switching unit (SE) to one another when the pressure within the battery housing (BG) exceeds the pressure threshold, and so as to electrically disconnect the two terminals (A1, A2) from one another when the pressure within the battery housing (BG) falls below the pressure threshold.

6. Arrangement (AO) according to Claim 5, further comprising:
- an air flow channel (LK) for discharging gases from the battery housing (BG) into the surroundings of the battery housing (BG), which air flow channel is fluidically connected to the pressure equalization valve (DV);
- an air mass sensor (LS), which is arranged in the air flow channel (LK), is connected on the signal output side, for signalling purposes, to a measurement signal input of a measured value evaluation circuit (MS) of the pressure measuring unit (DM) and is set up to measure a mass flow of the gases flowing out of the battery housing (BG) via the air flow channel (LK) and to forward measured values to the measured value evaluation circuit (MS);
- wherein the measured value evaluation circuit (MS) is furthermore set up to ascertain the pressure within the battery housing (BG) based on the measured values transmitted by the air mass sensor (LS).

7. Arrangement (AO) according to one of the preceding claims, further comprising:
- a second power supply path (SP2), which is embodied parallel to the first power supply path (SP1) ;
- a controllable switch (ST), which is electrically connected in the second power supply path (SP2);
- wherein the pressure measuring unit (DM) is electrically connected, in series with the switch (ST), to the second power supply path (SP2) for power supply purposes;
- wherein the switch (ST) is designed to be switchable between a closed, conductive switching state, in which it establishes a supply of power to the pressure measuring unit (DM) via the second power supply path (SP2), and an open, blocking switching state, in which it interrupts the supply of power to the pressure measuring unit (DM) via the second power supply path (SP2).

8. Battery management device (BV) for operating a battery system (BS) having a battery housing (BG) and a number of battery cells (BZ) arranged within the battery housing (BG), comprising:
- an arrangement (AO) according to one of the preceding claims;
- a battery management arrangement (BA) for operating the battery system (BS);
- wherein the pressure measuring unit (DM) is connected on the signal output side, for signalling purposes, to the battery management arrangement (BA) and is furthermore set up to forward measured values of the pressure within the battery housing (BG) to the battery management arrangement (BA);
- wherein the battery management arrangement (BA) is furthermore set up to use the transmitted measured values to detect a critical state in the battery system (BS) .

9. Battery management device (BV) according to Claim 8, wherein the battery management arrangement (BA) is furthermore connected, for signalling purposes, to a control signal terminal of the switch (ST) via a control signal output and is set up to open the switch (ST) in idle mode and thus to interrupt the supply of power for the pressure measuring unit (DM) via the second power supply path (SP2).

10. Battery management device (BV) according to Claim 8,
- wherein the battery management arrangement (BA) is electrically connected, in series with the switching unit (SE) and the pressure measuring unit (DM), to the first power supply path (SP1);
- wherein the switching unit (SE) is furthermore set up to establish a supply of power to the battery management arrangement (BA) via the first power supply path (SP1) in the electrically conductive switching state, and to interrupt the supply of power to the battery management arrangement (BA) via the first power supply path (SP1) in the electrically blocking switching state.

11. Battery system (BS), comprising:
- a battery housing (BG) and a number of battery cells (BZ) arranged within the battery housing (BG) ;
- a battery management device (BV) according to one of Claims 8 to 10 for operating the battery system (BS) ;
- wherein the battery management arrangement (BA) is furthermore set up to use the arrangement (AO) to monitor the pressure within a battery housing (BG) of the battery system (BS).

## Revendications

1. Arrangement (AO) de surveillance de la pression à l'intérieur d'un boîtier de batterie (BG) d'un système de batterie (BS), possédant :
- un premier trajet d'alimentation électrique (SP1) ;
- une unité de mesure de pression (DM) destinée à mesurer une pression à l'intérieur du boîtier de batterie (BG), qui, pour l'alimentation électrique, est raccordée électriquement au premier trajet d'alimentation électrique (SP1) ;
- une unité de commutation (SE) mécanique sensible à la pression, qui est disposée à l'intérieur du boîtier de batterie (BG) et qui est raccordée électriquement, par le biais de deux bornes électriques (A1, A2), au premier trajet d'alimentation électrique (SP1) en série avec l'unité de mesure de pression (DM) ;
- l'unité de commutation (SE) étant conçue pour, en cas de dépassement d'un seuil de pression prédéfini par la pression à l'intérieur du boîtier de batterie (BG), commuter dans un état de commutation électriquement conducteur et établir ainsi une alimentation électrique de l'unité de mesure de pression (DM) par le biais du premier trajet d'alimentation électrique (SP1) et, en cas de franchissement vers le bas du seuil de pression par la pression à l'intérieur du boîtier de batterie (BG), commuter dans un état de commutation électriquement bloquant et interrompre ainsi l'alimentation électrique de l'unité de mesure de pression (DM) par le biais du premier trajet d'alimentation électrique (SP1).

2. Arrangement (AO) selon la revendication 1,
- l'arrangement (AO) étant réalisé pour pouvoir fonctionner dans un mode de repos dans lequel l'arrangement (AO) interrompt l'alimentation électrique pour l'unité de mesure de pression (DM) et l'unité de mesure de pression (DM) ne mesure pas la pression ;
- l'unité de commutation (SE) étant en outre conçue pour,
• dans le mode de repos de l'arrangement (AO) et en cas de dépassement du seuil de pression prédéfini par la pression à l'intérieur du boîtier de batterie (BG), commuter dans l'état de commutation électriquement conducteur, et
• dans le mode de repos de l'arrangement (AO) et en cas de franchissement vers le bas du seuil de pression par la pression à l'intérieur du boîtier de batterie (BG), commuter dans l'état de commutation électriquement bloquant.

3. Arrangement (AO) selon l'une des revendications précédentes, le seuil de pression se trouvant au-dessous d'une valeur de seuil de pression critique, un état critique du système de batterie (BS) étant présent en cas de dépassement de cette valeur de seuil de pression critique par la pression à l'intérieur du boîtier de batterie (BG).

4. Arrangement (AO) selon l'une des revendications précédentes, l'unité de mesure de pression (DM) possédant un capteur de pression (DS) comprenant un élément micro-électromécanique (DE) sensible à la pression, l'élément micro-électromécanique (DE) étant réalisé en tant que partie de l'unité de commutation (SE) et étant conçu pour, en cas de dépassement du seuil de pression par la pression à l'intérieur du boîtier de batterie (BG), court-circuiter électriquement les deux bornes (A1, A2) l'une avec l'autre et, en cas de franchissement vers le bas du seuil de pression par la pression à l'intérieur du boîtier de batterie (BG), séparer électriquement les deux bornes (A1, A2) l'une de l'autre.

5. Arrangement (AO) selon l'une des revendications précédentes, possédant en outre :
- une vanne de compensation de pression (DV) destinée à évacuer des gaz hors du boîtier de batterie (BG) ;
- la vanne de compensation de pression (DV) possède une membrane (MB) mobile ou déformable de manière réversible ;
- la membrane (MB) est réalisée en tant que partie de l'unité de commutation (SE) et elle est conçue pour, en cas de dépassement du seuil de pression par la pression à l'intérieur du boîtier de batterie (BG), court-circuiter électriquement les deux bornes (A1, A2) de l'unité de commutation (SE) l'une avec l'autre par un mouvement provoqué par l'effet de la pression ou par une déformation provoquée par l'effet de la pression et, en cas de franchissement vers le bas du seuil de pression par la pression à l'intérieur du boîtier de batterie (BG), séparer électriquement les deux bornes (A1, A2) l'une de l'autre.

6. Arrangement (AO) selon la revendication 5, possédant en outre :
- un canal d'écoulement d'air (LK) destiné à évacuer des gaz hors du boîtier de batterie (BG) dans l'environnement du boîtier de batterie (BG), lequel est raccordé fluidiquement à la vanne de compensation de pression (DV) ;
- un capteur de masse d'air (LS), qui est disposé dans le canal d'écoulement d'air (LK), est raccordé signalétiquement du côté de la sortie de signal à une entrée de signal de mesure d'un circuit d'interprétation de valeurs mesurées (MS) de l'unité de mesure de pression (DM) et conçu pour mesurer un débit massique des gaz qui s'échappent hors du boîtier de batterie (BG) par le biais du canal d'écoulement d'air (LK) et retransmettre les valeurs mesurées au circuit d'interprétation de valeurs mesurées (MS) ;
- le circuit d'interprétation de valeurs mesurées (MS) étant en outre conçu pour déterminer la pression à l'intérieur du boîtier de batterie (BG) en se basant sur les valeurs mesurées communiquées par le capteur de masse d'air (LS).

7. Arrangement (AO) selon l'une des revendications précédentes, possédant en outre :
- un deuxième trajet d'alimentation électrique (SP2), qui est réalisé parallèle au premier trajet d'alimentation électrique (SP1) ;
- un commutateur (ST) commandable, qui est raccordé électriquement dans le deuxième trajet d'alimentation électrique (SP2) ;
- l'unité de mesure de pression (DM), pour l'alimentation électrique, étant raccordée électriquement au deuxième trajet d'alimentation électrique (SP2) en série avec le commutateur (ST) ;
- le commutateur (ST) étant réalisé commutable entre un état de commutation conducteur fermé, dans lequel celui-ci établit une alimentation électrique de l'unité de mesure de pression (DM) par le biais du deuxième trajet d'alimentation électrique (SP2), et un état commutation bloquant ouvert, dans lequel celui-ci interrompt l'alimentation électrique de l'unité de mesure de pression (DM) par le biais du deuxième trajet d'alimentation électrique (SP2).

8. Dispositif de gestion de batterie (BV) destiné à faire fonctionner un système de batterie (BS) comprenant un boîtier de batterie (BG) et un certain nombre de cellules de batterie (BZ) disposées à l'intérieur du boîtier de batterie (BG), possédant :
- un arrangement (AO) selon l'une des revendications précédentes ;
- un arrangement de gestion de batterie (BA) destiné à faire fonctionner le système de batterie (BS) ;
- l'unité de mesure de pression (DM) étant reliée signalétiquement par le côté sortie de signal à l'arrangement de gestion de batterie (BA) et étant en outre conçue pour retransmettre à l'arrangement de gestion de batterie (BA) les valeurs mesurées de la pression à l'intérieur du boîtier de batterie (BG) ;
- l'arrangement de gestion de batterie (BA) étant en outre conçu pour, à l'aide des valeurs mesurées communiquées, reconnaître un état critique au niveau du système de batterie (BS).

9. Dispositif de gestion de batterie (BV) selon la revendication 8, l'arrangement de gestion de batterie (BA) étant en outre relié signalétiquement, par le biais d'une sortie de signal de commande, à une borne de signal de commande du commutateur (ST) et étant conçu pour, dans le mode de repos, ouvrir le commutateur (ST) et ainsi interrompre l'alimentation électrique pour l'unité de mesure de pression (DM) par le biais du deuxième trajet d'alimentation électrique (SP2).

10. Dispositif de gestion de batterie (BV) selon la revendication 8,
- l'arrangement de gestion de batterie (BA) étant raccordé électriquement au premier trajet d'alimentation électrique (SP1) en série avec l'unité de commutation (SE) et l'unité de mesure de pression (DM) ;
- l'unité de commutation (SE) étant en outre conçue pour, dans l'état de commutation électriquement conducteur, établir une alimentation électrique de l'arrangement de gestion de batterie (BA) par le biais du premier trajet d'alimentation électrique (SP1) et, dans l'état électriquement bloquant, interrompre l'alimentation électrique de l'arrangement de gestion de batterie (BA) par le biais du premier trajet d'alimentation électrique (SP1).

11. Système de batterie (BS), possédant :
- un boîtier de batterie (BG) et un certain nombre de cellules de batterie (BZ) disposées à l'intérieur du boîtier de batterie (BG) ;
- un dispositif de gestion de batterie (BV) selon l'une des revendications 8 à 10 destiné à faire fonctionner le système de batterie (BS) ;
- l'arrangement de gestion de batterie (BA) étant en outre conçu pour surveiller la pression à l'intérieur du boîtier de batterie (BG) du système de batterie (BS) à l'aide de l'arrangement (AO).
